# EUROPEAN PATENT APPLICATION

(11) **EP 3 196 180 A1**
(43) Date of publication of application: **26.07.2017**
(21) Application number: 16151851.9
(22) Date of filing: 19.01.2016
(51) Int. Cl.: C05C 9/00, C05G 3/08

(54) **METHOD FOR OBTAINING AT LEAST ONE UREA-BASED FERTILIZER COMPOSITION**

(71) Applicant: Borealis Chimie SAS, 92400 Courbevoie (FR)
(72) Inventor: LANGPAPE, Martin, 27370 Le Thuit-Signol (FR); PETER, Antoine, 76000 Rouen (FR); LEITNER, Andreas, 4240 Freistadt (AT)
(74) Representative: Maikowski & Ninnemann Patentanwälte Partnerschaft mbB

(57) **Abstract**

The present invention relates to a method for obtaining at least one urea-based fertilizer composition comprising urea and/or at least one urea derivative and at least one urease inhibitor comprising the steps: a) providing at least one first melt of temperature T1 comprising the at least one urease inhibitor at a temperature range, at which decomposition of the at least one urease inhibitor is completely or almost inhibited; b) providing at least one second melt of temperature T2 comprising urea and/or the at least one urea derivative; c) adding the at least one first melt of the at least one urease inhibitor to the at least one second melt of urea and/or at least one urea derivative by forming a mixture wherein the residence time of the thus formed mixture before granulation is adjusted such that the at least one urease inhibitor is not or almost not decomposed in the mixture; and d) granulation of the mixture of the at least one urease inhibitor and the urea and/or the at least one urea derivative.

## Description

The present invention relates to a method for obtaining at least one urea-based fertilizer composition according to the preamble of claim 1, a fertilizer composition obtained by this method according to claim 14 and a plant according to claim 15.

### Description

Nitrogen is an important nutrient for plant growth that is supplied in agriculture in the form of N-containing fertilizers. Urea is one of the most commonly used N-based fertilizers. Nevertheless, urea is generally not directly available for the plants and needs to undergo transformation steps, over the ammonium to the nitrate form, before the plant can uptake the nitrogen by the roots.

These transformations take place in the soil due to enzymatic and bacteriologic activities. The first step, the formation of ammonia out of urea, is catalysed by the enzyme urease which is naturally present in the soil. In case urea hydrolysis occurs fast and near the soil surface, the released ammonia is only partly bound to soil particles, another part is lost to the atmosphere.

One approach to counteract this ammonia loss is to provide a urease inhibitor together with the fertilizer. The role of such a urease inhibitor is to slow down the rate of the conversion of urea to ammonia in order to increase the part of ammonia which will be bound to soil particles. One class of such urease inhibitors are phosphoric triamides, such as N-(n-butyl)thiophosphoric triamide (nBPT) that has been shown to reduce efficiently the ammonia release to atmosphere.

The use of N-(n-butyl)thiophosphoric triamide (nBPT) faces however some difficulties and drawbacks since its handling is hampered. nBPT is a sticky, waxy compound which is heat and water sensitive. Furthermore, solid flow parameters are disadvantageous for a precise direct dosing of the nBPT into any urea fertilizer.

In order to overcome this problem different solutions have been described in the past. One approach is to use an appropriate solvent system in order to dissolve nBPT. The obtained solution can then be used to add the nBPT to granular urea or to liquid fertilizers containing urea such as urea-ammonium nitrate solutions, allowing an easier handling and a better dispersion of the nBPT in the fertilizer. WO 2013/090324 A1 describes for instance the use of a solvent system comprising dioxolane, adibasic ester, glycerine and others.

Another approach is to provide an appropriate carrier for the urease inhibitor. WO 2013/123229 A1 describes the use of urea-formaldehyde polymer material as such a carrier, which is then extruded together with nBPT. The thus obtained composition that means the urease inhibitor supported on a carrier or dissolved in an appropriate solvent system can then be added to the fertilizer in different ways. The easiest solution in case of solid fertilizer granules containing urea is to perform a sort of coating. An alternative option is to add it to the urea containing fertilizer during the granulation process.

There are however multiple disadvantages of the presently known systems. The solutions described in the prior art use in each case an additional process step to improve the manipulation and thus the precise dosing of nBPT in urea fertilizers. Besides the fact that an additional step represents additional production costs, other drawbacks of the solutions are the risk linked to the harmful solvents used in some proposals, the presence of these solvents in the fertilizer, which in turn can cause environmental problems and influence product quality.

In case of coating a urea containing fertilizer granule with the compound containing the urease inhibitor, the inhibitor is present only on the surface of the fertilizer granule. Thus dust formed by abrasion during material handling will have a high concentration of urease inhibitor, which enhances the risk of exposure of users to harmful concentrations of the urease inhibitor. Also, surface coating will expose the urease inhibitor to ambient conditions (such as air and humidity) which are factors supposed to increase the rate of degradation of the urease inhibitor.

The degradation of the inhibitor is a known phenomenon which occurs during storage of the fertilizer. Slowing down the degradation rate allows saving active material without losing efficiency and thus brings an economic advantage.

The potential use of certain urease inhibitors is defined in Europe by the European Fertilizer Regulation CE 2003/2003 in its last version dated 15^{th} December 2014. This regulation defines for approved urease inhibitors as for the nBPT authorized minimum and maximum concentrations in the urea containing fertilizer. The rate of degradation defines thus the lifetime of the fertilizer until the presence of the urease inhibitor cannot be claimed any more.

Since degradation occurs and regulatory limits exist, a precise dosing of the urease inhibitor into the fertilizer is of importance. Also, a precise dosing allows to adjust the amount of the inhbitor to the desired concentration in order to achieve either long lifetime (concentration close to the upper regulatory limit) or a more economic product (concentration close to the lower regulatory limit), depending on the desired storage time.

The object of the present invention is thus to provide a method and a composition which is able to circumvent these problems and allows the production of a urea-based fertilizer comprising a urease inhibitor in a cost efficient and effective manner. A urea-based fertilizer in the meaning of this invention is a fertilizer containing urea and/or a compound called hereafter urea derivative which undergoes transformation into urea when applied as fertilizer to the soil.

This object is being solved by providing a method according to claim 1 and a composition according to claim 14.

Accordingly a method for obtaining at least one urea-based fertilizer composition comprising urea and/or at least one urea derivative and at least one urease inhibitor is provided, which comprises the following steps:
a) providing at least one first melt comprising the at least one urease inhibitor at a temperature T1, at which decomposition of the at least one urease inhibitor is completely or almost inhibited;
b) providing at least one second melt of temperature T2 comprising urea and/or the at least one urea derivative;
c) adding the at least one first melt of the at least one urease inhibitor to the at least one second melt of urea and/or at least one urea derivative whereby forming a mixture, wherein the residence time of the thus formed mixture before granulation is adjusted such that the at least one urease inhibitor is not or almost not decomposed in the mixture; and
d) forming solid fertilizer granules by the use of the mixture of the at least one urease inhibitor and the urea and/or the at least one urea derivative.

In a preferred embodiment of the process the temperature T1 of the at least one first melt of the at least one urease inhibitor is lower than the temperature T2 of the at least one second melt of urea and/or the at least one urea derivative.

Thus, the first melt comprising the at least one urease inhibitor and the second melt comprising urea and/or urea derivative are mixed in such a manner that the decomposition of the more heat sensitive urease inhibitor in the hotter melt of the urea or urea derivative containing compound before granulation is slowed down or even prevented. Since the urea containing melt has generally a higher temperature than the melt containing the urease inhibitor, it is advantageous to keep residence time of the mixture of both melts before granulation as short as possible. This avoids important losses of urease inhibitor due to thermal decomposition in the hotter urea melt.

This can be achieved by providing the mixture as close as technically possible to the granulation unit, i.e. the urease inhibitor melt is injected into the pipeline carrying the urea melt and/or urea derivative melt within a short distance to the outlet of said pipeline into to granulation unit.

The maximum residence time of the mixture before granulation depends on the effective stability of the urease inhibitor under conditions and especially temperature under which the urea or urea derivative containing melt is provided for granulation. In the most sensitive cases (low stability of the inhibitor and high temperature of the urea containing melt) the maximum residence time can be as low as a few seconds. In this case, and in order to reduce the residence time of the urease inhibitor in the urea melt even further it is of an advantage to avoid any equipment that reduces the linear flow speed of the fluid (melt) between the injecting point of the urease inhibitor melt into the urea melt and the granulation unit. For example a storage tank for the melt should be avoided.

A more stable inhibitor mixed with a urea containing melt at low temperature may allow a residence time of up to one hour or more, giving thus the possibility for an intermediate storage of the mixed melts. When using nBPT as urease inhibitor and urea or urea derivative containing melt comprised essentially by urea, maximum residence time may be less than 30 min, preferably less than 15 min, most preferably less than 5 min. In a most preferred embodiment the residence time between injection (or mixing) and granulation is of approximately 0.2 to 1 min.

In one embodiment of the present process the residence time of the at least one molten urease inhibitor in the molten urea and/or at least one molten urea derivative is chosen such that any decomposition of the at least one urease inhibitor in the molten urea and/or at least one molten urea derivative is lower than 10%, preferably lower than 5%, most preferably lower than 3% in respect to the initial urease inhibitor concentration.

To improve the mixing of the two fluids or melts, a mixer can be used. For the above mentioned reasons, it is however of an advantageous to provide a static mixer with only a small residence time of the melt in the mixer.

In another embodiment of the process further additives, in particular a formaldehyde containing additive is added to the second melt comprising the urea and/or at least one urea derivative. The additive is preferably added before the granulation process, e.g. in order to improve the physical properties of the granules, especially their caking behaviour. This can be realized just upfront of the granulation step, with a static mixer provided to assure a proper mixing of the additive and the urea melt.

In that case, it is advantageous to inject the urease inhibitor melt either together with these further additives, or to inject the urease inhibitor melt at a point close to the injection point of these further additives and upfront of the mixer. This is an economic solution since no additional mixer has to be provided.

In another embodiment, an external coating to prevent caking can be added after the granulation step.

The concentration of the urease inhibitor in the mixture depends on many factors such as the efficiency of the inhibitor to block urease, and as a consequence the concentration necessary to achieve the desired agronomic effect. Therefor the concentration depends on the nature of the urease inhibitor. Moreover, the concentration depends also on the stability of the inhibitor during the granulation process and during storage of the fertilizer, but also regulatory limits if ever they exist.

When using nBPT as urease inhibitor, the concentration is defined by regulatory limits (see European Fertilizer Regulation CE 2003/2003) and is optimized within these limits based on economic aspects as well as the expected lifetime of the fertilizer. The concentration of nBPT in urea is between 0.042 and 0.093 wt%.

In general the amount of urease inhibitor depends on the overall content of urea or urea derivative in the fertilizer.

It is preferred if no solvent and/or carrier is used for the at least one urease inhibitor. Thus, the at least one urease inhibitor may not comprise any additional solvent or may not be mixed with any carrier material or supported by any carrier material.

In a yet further embodiment of the present method the at least one urease inhibitor is of the general formulae

R¹R²N-PXNR³R⁴NR⁵R⁶

wherein
- X is S or O
- R¹, R² are H, alkyl, alkenyl, alkinyl, cycloalkyl or aryl and can be the same or different, or R¹, R² together form a C₃-C₈ ring system, optionally containing one or more heteroatoms of oxygen, sulfur or nitrogen, and
- R³, R⁴, R⁵, R⁶ are H, C₁-C₆ alkyl, preferably C₁-C₄ alkyl and can be the same or different.

It is preferred, if R¹, R² are H or C₁-C₁₀ alkyl, preferably C₂-C₆ alkyl, in particular methyl, ethyl, propyl, isopropyl, n-butyl, isobutyl, sec-butyl, tert-butyl, pentyl, hexyl, cyclopentyl.

In a most preferred embodiment of the present method the at least one urease inhibitor is at least one alkyl thiophosphoric triamide, in particular N-(n-propyl)thiophosphoric triamide or N-(n-butyl)thiophosphoric triamide (nBPT). nBPT is the most preferred urease inhibitor.

In a further variant of the present method the at least one urease inhibitor such as nBPT is provided as a solid white powder which is transferred to at least one melting apparatus, preferably a heated melting tank equipped with an agitator and a waste gas scrubbing system. The flow of the powder is controlled and adjusted by appropriate detectors in the melting apparatus.

It is furthermore preferred if the temperature T1 of the at least one first melt comprising the at least one urease inhibitor is adjusted such that no or almost no release of R¹R²-NH₂ as decomposition product of the at least one urease inhibitor is detected.

Thus, the temperature T1 of the at least one first melt comprising the at least one urease inhibitor has to be adjusted to the chemical nature of the urease inhibitor. Also local overheating must be avoided for preventing any decomposition of the urease inhibitor.

In one embodiment temperature T1 of the first melt corresponds to the melting temperature of the at least one urease inhibitor plus 5°C to 25°C, preferably plus 10°C and plus 25°C, most preferably plus 10°C and plus 20°C. In the case of nBPT as urease inhibitor with a melting temperature of 56-57°C, the temperature T1 may be thus in the range between 60°C and 80°C, preferably between 65°C and 80°C, most preferably between 65°C and 75°C. Under these conditions, no significant amount of n-butyl amine is released from the melt.

It is furthermore preferred if the temperature T2 of the at least one second melt comprising urea or the at least one urea derivative is kept adjusted to a value just above the melting temperature of the mixture in order to avoid further degradation of the urease inhibitor when added to this at least second melt. It is not excluded to introduce compounds in this mixture in order to lower its melting temperature. In case this at least one second melt is essentially composed by urea, it is preferred if the temperature T2 of the melt is between 110 and 160°C, preferably between 120 and 140 °C, most preferably between 130 and 135 °C.

In a variant of the present method the at least one first melt comprising the at least one urease inhibitor and the at least one second melt comprising urea and/or the at least one urea derivative comprises further additives, in particular a formaldehyde containing compound, in particular in form of urea-formaldehyde polymer or condensate.

Thus, either the at least first melt containing the urease inhibitor or the at least second melt containing the urea compound may contain also other additives such as the formaldehyde containing compound mentioned earlier without departing from the present invention.

The at least one first melt comprising the at least one urease inhibitor may be added to the second melt comprising urea and/or the at least one urea derivative via a suitable pump and/or a flow meter. As mentioned previously, the mixture of the urease inhibitor melt and the urea or urea derivative containing melt may pass a static mixer located in the pipeline for mixing both melts in order to achieve a homogenous distribution of all compounds within the combined melt. In a preferable embodiment, no further elements are located or disposed within the pipeline which would increase significantly the residence time of the melt mixture within the pipeline before granulation step.

In the further granulation step, the mixture of the at least two melts is transformed into solid fertilizer granules, whereas granulation should not be considered as a restrictive term in view of the applied method. The granulation step can be realized e.g. by one of the following processes:
- Prilling process
- Fluidized bed granulation
- Drum granulation
- Spherodizer process
or any other process developed to form solid fertilizer granules.

The present method is carried out in a plant comprising:
- at least one melting unit for at least one urease inhibitor;
- at least one unit for supplying urea and/or the at least one urea derivative in molten form;
(such as a plant for production of urea or at least one melting unit for urea and/or at least one urea derivative);
- at least one pipeline for transporting the urea melt;
- at least one inlet (for example injection nozzle) for feeding the urease inhibitor melt into the pipeline,
- optionally a mixer, preferably a static mixer, for mixing the urease inhibitor melt and the urea / urea derivative melt, and
- at least one granulation unit,
wherein the at least one inlet for the urease inhibitor melt and the preferably used static mixer are arranged upstream and close to the at least one granulation unit.

The term "close" in the context of the present invention means that the inlet for the urease inhibitor melt and the static mixer are near to the outlet of the pipeline transporting the urea melt into the granulation unit. This means that the distance between melt inlet and granulation unit is chosen such that the residence time of the urease inhibitor in the melt is kept to a minimum, i.e. none or only a small percentage of the urease inhibitor is degraded in the urea melt.

As mentioned above the object of the present invention is also solved by providing a urea - based fertilizer composition comprising at least one urease inhibitor compound and urea and/or at least one urea derivative that is obtainable by the described method.

The present composition is characterized by a homogenous distribution of the at least one urease inhibitor within the urea and/or the at least one urea derivative.

The amount of the at least one urease inhibitor in the present composition may be between 0.005 and 1 wt%; the amount of urea and/or urea derivative in the present composition may be between 30 and 99.95 wt%. Further additives, such as formaldehyde containing additives, or ammonium salts, such as ammonium sulfate may be added.

The present urea based fertilizer is characterized by an increased storage stability. In particular the degradation of the urease inhibitor is slower in case of the present compound compared for instance to a preparation wherein urea is coated with the urease inhibitor (e.g. nBPT). In an embodiment of the present fertilizer 90 - 99 % of nBPT can be recovered after a storage time of 3-6 months at 25°C.

The efficiency of the present urea fertilizer may also be described by means of ammonia volatilization (i.e. nitrogen loss by ammonia release to atmosphere) when applied to the soil surface. This ammonia release can be measured in lab tests or in field trials, and compared to the same fertilizer but not containing the urease inhibitor as reference under otherwise similar conditions. In one embodiment the ammonia release of the claimed fertilizer is less than 70% of the release observed for the reference, preferably less than 50% and most preferably less than 20% of the reference.

The present method and fertilizer composition provide multiple advantages over the known processes:
Compared to the use of an nBPT solution, the technical advantage of the present method is that it does not require any solvent in order to produce the combined fertilizer. No solvent means cost savings, less safety and health risks, no solvent residues in the final fertilizer or in the off-gases from the granulation process which would increase complexity in the off-gas purification device.
Compared to the addition of solid nBPT or a solid nBPT formulation to a urea melt adding the nBPT in the form of a melt allows an easier and more precise dosage of the nBPT. As a consequence, it is possible to meet the upper regulatory limit for nBPT content in a urea fertilizer without the risk of exceeding said limit. This is an important factor since a higher nBPT content in the final fertilizer means a longer lifetime of the fertilizer, but when exceeding the allowed limit commercialization of the product is no more possible..

Furthermore, an efficient nBPT Urea fertilizer can be obtained without employing Urea Formaldehyde Polymers as support for the nBPT. This means that the new process does not require a preceding production of such nBPT coated UFP but simply uses directly nBPT to be added to Urea melt.

The present invention is explained in more details by means of the following examples with reference to the figures. It shows:
- Figure 1: a scheme of an embodiment of the method according to the invention;
- Figure 2: a diagram depicting the degradation of nBPT at 25°C in a fertilizer according to the invention compared to nBPT in urea wherein nBPT is applied as surface coating;
- Figure 3: a diagram depicting the nBPT loss in urea melt at defined temperatures during one hour storage;
- Figure 4: a diagram illustrating the nitrogen loss by volatilization of an embodiment of the present urea-based fertilizer, compared to standard urea and to urea surface coated with nBPT, measured in a laboratory device.

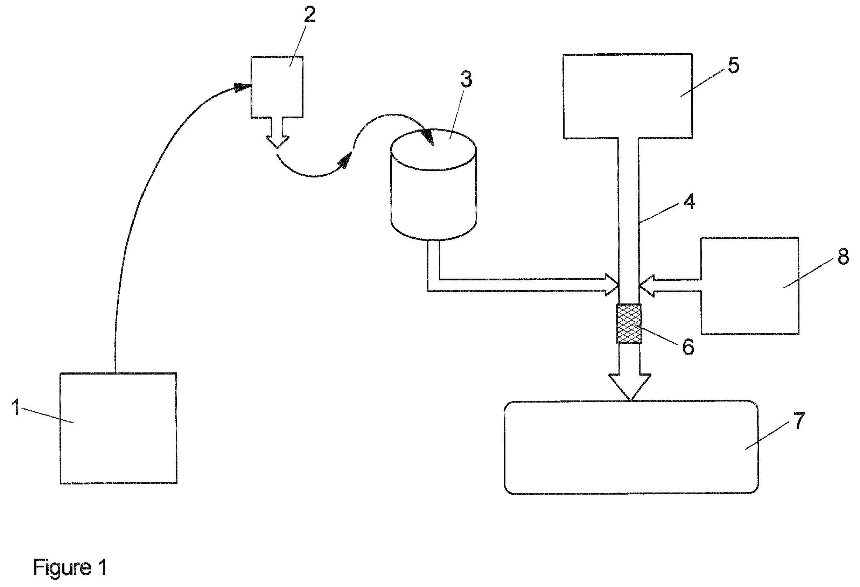

Figure 1 illustrates a scheme of a preferred embodiment of the present method using nBPT as urease inhibitor and urea. The nPBT inhibitor is transferred from the storage unit 1 (for example big bags) to a big bag emptying device 2 and further directly to the nBPT melting unit 3.

The nPBT melt is injected into the pipeline 4 transporting urea melt from a urea melt storage tank 5. In order to improve the distribution of both melts a static mixer 6 is preferably used which is arranged shortly after (downstream) the injection point of the NBPT melt into the urea melt and shortly before (upstream) the granulation unit 7.

In addition a urea-formaldehyde (UF) additive 8 is added to the melts of nBPT and urea. In the embodiment of Figure 1 the UF additive is injected into the urea melt at the same location as the nBPT melt, but other configurations like nBPT injection followed by UF additive injection, or UF additive injection first, or even premixing of nBPT and UF additive can also be realized. Thus, the static mixer 6 is used for mixing nBPT melt and UF additive with urea melt.

### Example 1

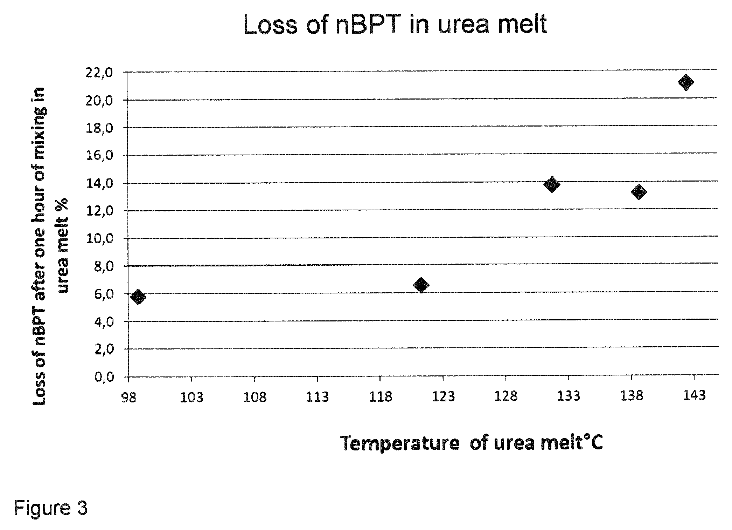

The example shown in Figure 3 describes the simulation in a smelter of the introduction and the mixing of the nBPT in the urea melt followed by storage during one hour at different temperatures. The experiments are run in an electrically heated melting unit (capacity of 8 litres) equipped with a stirrer, a reflux system and temperature control at two points in order to ensure homogenous temperature over the whole melt. Urea is molten first and heated to the desired temperature. For temperatures lower than the melting temperature of pure urea, the minimum amount of water is added in order to obtain a melt at the desired temperature. Then nBPT is added under stirring. Samples are taken regularly during the storage and analyzed by HPLC to measure the nBPT, urea and biuret concentrations.

The tests have been run with around 4 kg of melt and with different concentrations of urea in the melt between 75 and 98%. Temperatures are chosen according to the phase diagram of urea solution in order to avoid solidification and boiling: Urea 75% at 100°C; Urea 90% at 120 °C; Urea 95% at 130 °C; Urea 98% at 140 °C.

The quantity of nBPT added is about 900 mg/kg urea which is close to the maximum of nBPT authorized by European Regulation 2003/2003.

The samples of about 20 g are taken by the top of the smelter with a ladle and added quickly into a weighted quantity of water in order to freeze the degradation of the nBPT.

nBPT content decreases continuously under these conditions. The loss of nBPT during one hour of mixing according to the temperature of the urea melt is summarized in Figure 3.

### Example 2

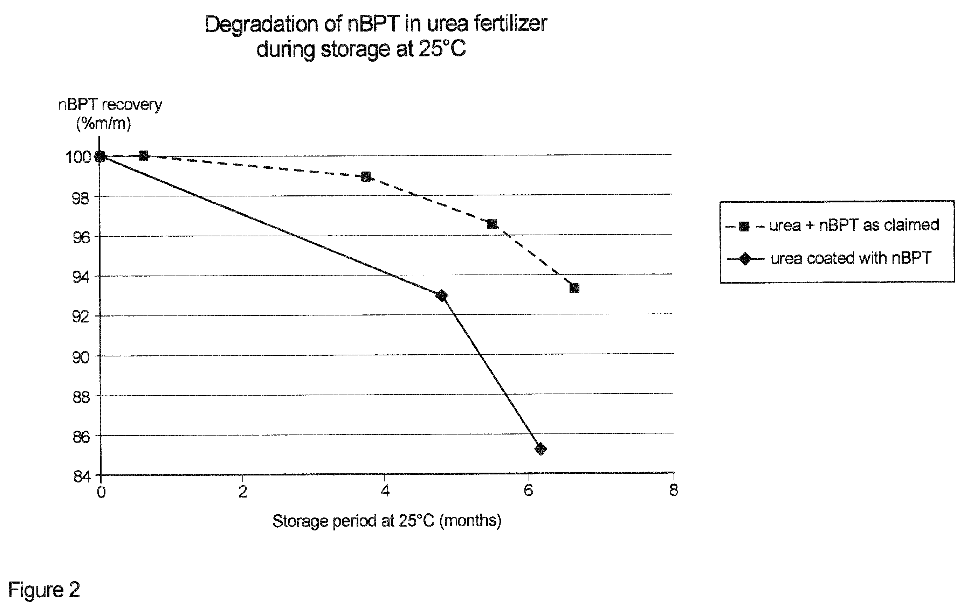

Storage of nBPT treated urea has been examined at room temperature over several months in order to observe degradation of nBPT during storage. Fertilizer samples have been stored in a climatic enclosure at 25°C in closed bags. The content of nBPT has been analysed at different moments by HPLC. The ratio between the so analyzed content and the initial content of nBPT is expressed as nBPT recovery (see Figure 2). The results show a much higher nBPT recovery in case of a compound prepared by the present method compared to urea coated with nBPT.

### Example 3

Ammonia volatilization of a fertilizer prepared according to the present method, compared to standard urea and urea surface coated with nBPT, has been analyzed by means of volatilization chambers. In these volatilization chambers, similar soil samples were placed in different cells under controlled conditions of humidity, each cell allowing the test of one fertilizer sample. The fertilizer samples are surface applied in the cells. The chambers are flushed by a constant flow of air, which passes after the chamber through a sulfuric acid trap. If volatilization takes place, ammonia is thus transferred into the trap and amount of volatilization is determined by analyzing the ammonia content in the trap. This volatilization is expressed as nitrogen loss in kg per ha, taking into account the soil surface of the cells and the quantity of fertilizer applied. Measures of the ammonia volatilization are continued over four weeks.

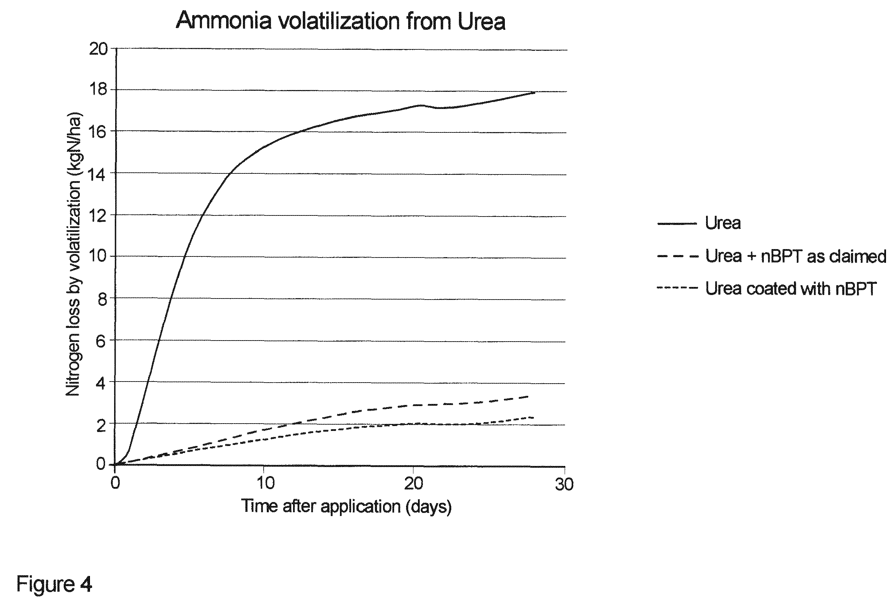

The results presented in the diagram of Figure 4 show thus the agronomic efficiency of the nBPT addition according to the present method in comparison with standard urea and urea treated by nBPT by surface coating. It can clearly be seen that the present fertilizer product has an even higher efficiency (lower N loss by volatilization) than the "state of the art product".

## Claims

1. Method for obtaining at least one urea-based fertilizer composition comprising urea and/or at least one urea derivative and at least one urease inhibitor
comprising the steps:
a) providing at least one first melt comprising the at least one urease inhibitor at a temperature T1, at which decomposition of the at least one urease inhibitor is completely or almost inhibited;
b) providing at least one second melt of temperature T2 comprising urea and/or the at least one urea derivative;
c) adding the at least one first melt of the at least one urease inhibitor to the at least one second melt of urea and/or at least one urea derivative by forming a mixture wherein the residence time of the thus formed mixture before granulation is adjusted such that the at least one urease inhibitor is not or almost not decomposed in the mixture; and
d) forming solid fertilizer granules by use of the mixture of the at least one urease inhibitor and the urea and/or the at least one urea derivative.

2. Method according to claim 1, **characterized in that** the temperature T1 of the at least one first melt of the at least one urease inhibitor is lower than the temperature T2 of the at least one second melt of urea and/or the at least one urea derivative.

3. Method according to claim 1 or 2, **characterized in that** the residence time of the at least one molten urease inhibitor in the molten urea and/or at least one molten urea derivative is chosen such that any decomposition of the at least one urease inhibitor in the molten urea and/or at least one molten urea derivative is lower than 10%, preferably lower than 5%, most preferably lower than 3% in respect to the initial urease inhibitor concentration.

4. Method according to one of the preceding claims, **characterized in that** the residence time of the at least one molten urease inhibitor in the molten urea and/or at least one molten urea derivative is less than 60 min, preferably less than 15 min, more preferably less than 5 min and most preferably less than 1 min.

5. Method according to one of the preceding claims, **characterized in that** the melt before granulation comprises between 30 and 99.95 wt% of urea and/or the at least one urea derivative and between 0.005 and 1 wt% of the at least one urease inhibitor.

6. Method according to one of the preceding claims **characterized in that** there is no solvent and/or carrier used for the at least one urease inhibitor.

7. Method according to one of the preceding claims **characterized in that** the at least one urease inhibitor is of the general formula
R¹R²N-PXNR³R⁴NR⁵R⁶
wherein
- X is S or O
- R¹, R² are H, alkyl, alkenyl, alkinyl, cycloalkyl or aryl and can be the same or different, or R¹, R² together form a C₃-C₈ ring system, optionally containing one or more heteroatoms of oxygen, sulfur or nitrogen, and
- R³, R⁴, R⁵, R⁶ are H, C₁-C₆ alkyl, preferably C₁-C₄ alkyl and can be the same or different.

8. Method according to claim 7, **characterized in that** R¹, R² are H or C₁-C₁₀ alkyl, preferably C₂-C₆ alkyl, in particular methyl, ethyl, propyl, isopropyl, n-butyl, isobutyl, sec-butyl, tert-butyl, pentyl, hexyl or cyclopentyl.

9. Method according to one of the preceding claims, **characterized in that** the at least one urease inhibitor is at least one alkyl thiophosphoric triamide, in particular N-(n-propyl)thiophosphoric triamide or N-(n-butyl)thiophosphoric triamide (nBPT), most preferably N-(n-butyl)thiophosphoric triamide (nBPT).

10. Method according to one of the preceding claims, **characterized in that** the temperature T1 of the at least one first melt comprising the at least one urease inhibitor is adjusted such that no or almost no release of R¹R²-NH₂ as decomposition product of the at least one urease inhibitor is detected.

11. Method according to one of the preceding claims, **characterized in that** the temperature T1 of the at least one first melt comprising the at least one urease inhibitor corresponds to the melting temperature of the at least one urease inhibitor plus 5°C to 25°C, preferably plus 10°C and plus 25°C, most preferably plus 10°C and plus 20°C.

12. Method according to one of the preceding claims **characterized in that** the temperature T2 of the at least one second melt comprising urea and/or the at least one urea derivative is between 110 and 160 °C, preferably between 120 and 140 °C, most preferably between 130 and 135°C.

13. Method according to one of the preceding claims, **characterized in that** the at least one first melt comprising the at least one urease inhibitor and/or at least one second melt comprising the urea and/or at least one urea derivative and/or the final mixture of both melts comprise further additives, in particular formaldehyde containing additives.

14. A Urea -based fertilizer composition comprising at least one urease inhibitor compound and urea and/or at least one urea derivative obtainable in a method according to one of the preceding claims.

15. Integrated urea plant for a method according to one of the claims 1 to 13 comprising:
- at least one melting unit for at least one urease inhibitor;
- at least one unit for supplying the urea and/or the at least one urea derivative in molten form;
- at least one pipeline for transporting the urea melt;
- at least one inlet for feeding the urease inhibitor melt into the pipeline,
- optionally a mixer, preferably a static mixer for mixing the urease inhibitor melt and the urea / urea derivative melt, and
- at least one granulation unit,
- wherein the at least one inlet for the urease inhibitor melt and the optional static mixer are arranged immediately upstream of the at least one granulation unit.
